# FASCICULE DE BREVET EUROPEEN

(11) **EP 1 864 045 B1**
(45) Date de publication et mention de la délivrance du brevet: **16.07.2008**
(21) Numéro de dépôt: 06706997.1
(22) Date de dépôt: 16.02.2006
(51) Int. Cl.: F16L 3/127, F16L 3/12

(54) **DISPOSITIF DE FIXATION À FERMETURE AUTOMATIQUE D'UN ÉLÉMENT SUR UN SUPPORT FIXE**
AUTOMATISCH SCHLIESSENDE VORRICHTUNG ZUR BEFESTIGUNG EINES ELEMENTS AN EINER FESTSTEHENDEN STÜTZE
AUTOMATICALLY-CLOSING DEVICE FOR FIXING AN ELEMENT TO A FIXED SUPPORT

(30) Priorité: 08.03.2005 FR 0502313
(43) Date de publication de la demande: 12.12.2007
(73) Titulaire: A. RAYMOND ET CIE, 38000 Grenoble (FR)
(72) Inventeur: LEMAIRE, Bruno, F-38950 Saint Martin Le Vinoux (FR); TRESORIER, Jean-François, F-38130 Echirolles (FR); ARINO, Jacques, F-38100 Grenoble (FR)
(74) Mandataire: Rüttgers, Joachim
(86) Numéro de dépôt international: PCT/EP2006/001396
(87) Numéro de publication internationale: WO 2006/094609

(56) Documents cités:
- DE-A1- 2 734 753
- FR-A- 2 367 213
- US-A- 3 944 177
- US-A- 5 277 387

## Description

### Domaine technique de l'invention

L'invention concerne un dispositif de fixation, d'un élément sur un support fixe, comprenant une pince de serrage à fermeture automatique, destinée à maintenir l'élément, après fixation sur le support, et comportant :
- un berceau principal, muni à ses extrémités de berceaux secondaires, constituant les mâchoires de la pince,
- une zone d'appui centrale, formée par une partie des berceaux secondaires et coopérant avec l'élément à fixer, pour actionner la fermeture automatique des berceaux secondaires autour de l'élément,
- des moyens de fixation de la pince, dans un logement du support fixe.

### État de la technique

Il existe différents types de dispositifs de fixation connus à fermeture automatique, par example, le document US 5277387. Ces dispositifs sont généralement utilisés pour faciliter la fixation et le montage d'un élément quelconque, généralement de forme cylindrique, contre un support fixe, par exemple un mur.

Des dispositifs de fixation connus sont, par exemple, un anneau ouvert flexible, en forme de lyre, dans lequel se clipse l'élément, ou une lanière crantée entourant l'élément à fixer. Ces dispositifs sont fixés sur un support par l'intermédiaire d'éléments distincts du type vis, clous, etc. De tels dispositifs rendent nécessaire l'utilisation d'un outil, ce qui complique leur fixation. Par ailleurs, la fixation s'effectue avec une pièce distincte pouvant se perdre facilement pendant le montage.

Un autre exemple connu de dispositif de fixation est une pince de serrage à fermeture automatique. La fermeture automatique est réalisée par l'élément lui-même, qui effectue une pression sur une zone d'appui centrale, provoquant le resserrement de deux branches de la pince autour de l'élément. Une telle pince est généralement munie d'un pied de fixation du type ancre ou du type sapin.

Cependant, un tel dispositif de fixation s'avère difficile à mettre en oeuvre, car il faut d'abord serrer l'élément dans la pince, puis fixer ensuite le dispositif dans le support. Les efforts de montage sont trop importants et nécessitent l'utilisation d'un outil.

### Objet de l'invention

L'invention a pour but de remédier aux inconvénients précités et a pour objet la réalisation d'un dispositif de fixation améliorant les dispositifs existants et pouvant gérer différentes tailles d'éléments à fixer, sans nécessiter d'outils de montage et d'accessoires spécifiques, pour la fixation du dispositif sur son support.

L'objet de l'invention est caractérisé en ce que la zone d'appui de la pince comporte des moyens d'actionnement coopérant avec lesdits moyens de fixation, pour verrouiller la pince dans le logement lors de la fermeture automatique des berceaux secondaires.

Selon un développement de l'invention, lesdits moyens d'actionnement comportent une goupille, faisant saillie de la zone d'appui, à l'intérieur du berceau principal.

Selon un autre développement de l'invention, lesdits moyens de fixation comportent une cheville comprenant :
- deux montants parallèles déformables, solidaires du berceau principal de la pince et délimitant une fente d'insertion, la goupille d'actionnement s'insérant dans la fente pendant la fermeture automatique des berceaux secondaires, provoquant l'expansion radiale des montants, dans le logement du support fixe,
- et un embout libre non déformable, constituant l'âme des deux montants.

Un tel dispositif de fixation permet d'effectuer simultanément le serrage de l'élément dans la pince et le verrouillage de la pince à l'intérieur du support fixe. La fixation est donc rapide et facile à mettre en oeuvre.

Selon un mode de réalisation préférentiel, la goupille comporte une extrémité libre biseautée. Chaque montant est doté d'au moins un bossage interne, les bossages étant disposés en regard à l'intérieur de la fente et délimitant un intervalle de passage pour la goupille d'actionnement.

L'extrémité libre biseautée de la goupille, associée aux bossages internes de la fente, permet une expansion radiale progressive des montants, afin d'optimiser la fixation de la cheville à l'intérieur du logement du support fixe.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
Les figures 1 et 2 représentent un mode particulier de réalisation d'un dispositif de fixation selon l'invention, respectivement dans une position ouverte, avec les mâchoires de la pince en position de repos, et dans une position fermée, avec les mâchoires de la pince autour de l'élément à fixer.
Les figures 3 et 4 représentent le dispositif de fixation selon les figures 1 et 2, respectivement logé dans le support fixe, avant serrage de l'élément entre les mâchoires, et fixé dans le logement du support fixe, après serrage de l'élément entre les mâchoires.

### Description du mode particulier de réalisation

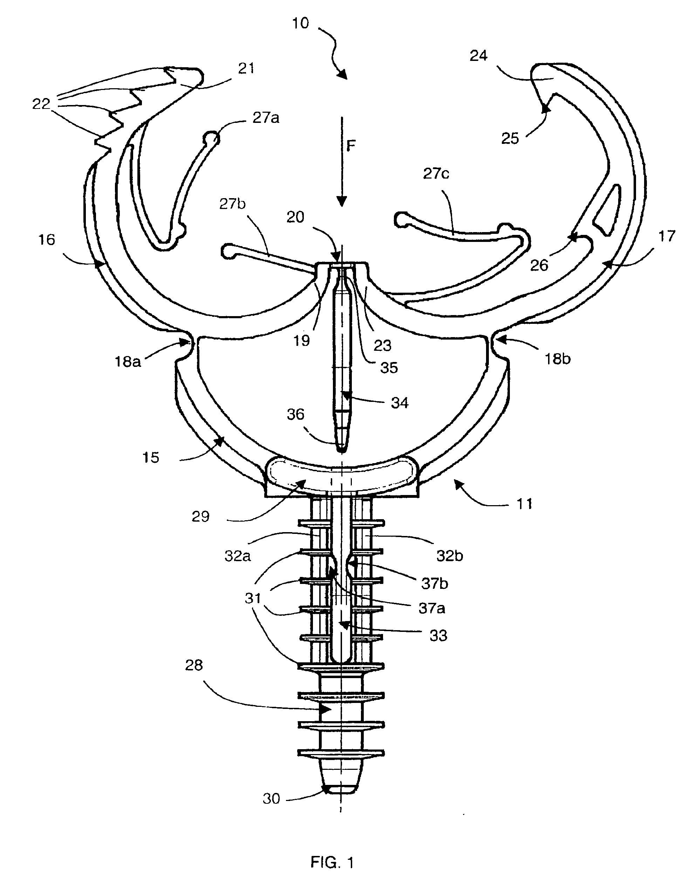

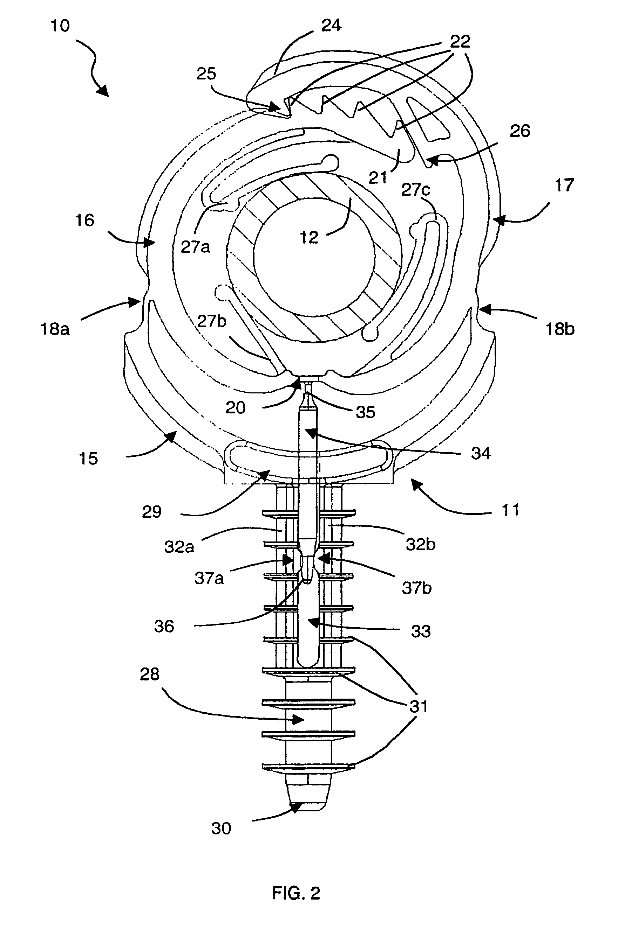

En référence aux figures, le dispositif de fixation 10 comporte une pièce, de préférence en matériau thermoplastique, obtenue par moulage et conformée en pince de serrage 11. La pince 11 présente deux mâchoires en forme d'arc de cercle, susceptibles de passer d'une position ouverte, ou position de repos, représentée sur la figure 1, à une position fermée, ou position de verrouillage, représentée sur la figure 2.

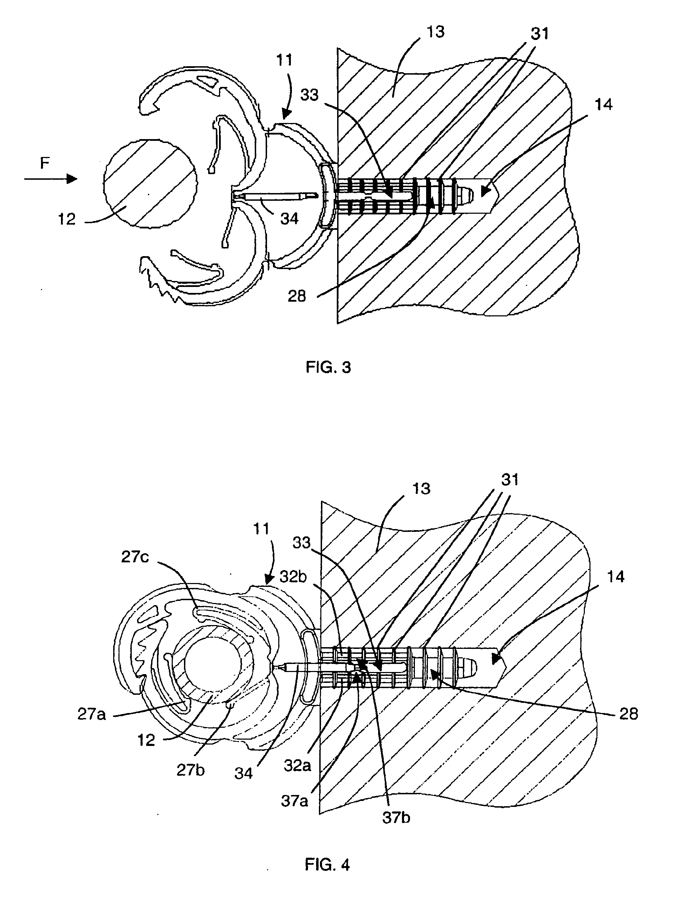

Les mâchoires sont destinées à maintenir et serrer un élément 12 quelconque, de préférence, de forme sensiblement cylindrique (figure 3) ou tubulaire (figures 2 et 4). La pince de serrage 11 est également destinée à fixer l'élément 12 sur un support fixe 13 (figures 3 et 4).

L'élément 12 est, par exemple, un câble, un tuyau ou tout autre objet présentant une forme extérieure sensiblement cylindrique. Le support fixe 13 est, par exemple, un mur et comporte un logement 14, dans lequel est insérée la pince de serrage 11.

Sur la figure 1, la pince 11 comporte un berceau principal 15 central, sensiblement en forme d'arc de cercle, surmonté sur chacune de ses extrémités par un premier berceau secondaire 16 et un second berceau secondaire 17, jouant le rôle des mâchoires de serrage de la pince 11. Les berceaux secondaires 16 et 17 sont susceptibles de s'écarter et se rapprocher l'un de l'autre, pour passer de la position ouverte à la position fermée de serrage, dans laquelle ils entourent l'élément 12 et le maintiennent en position (figure 2).

Les berceaux secondaires 16 et 17 sont articulés sur les extrémités du berceau principal 15 par des charnières 18a, 18b, jouant le rôle d'articulation entre les extrémités du berceau principal 15 et les berceaux secondaires 16 et 17. Les charnières 18a, 18b sont constituées, par exemple, par des rétrécissements de matière de la pince 11.

Le premier berceau secondaire 16, articulé par la charnière 18a, présente une première extrémité 19, reliée à une zone d'appui 20 centrale, et une seconde extrémité 21 libre, munie d'une pluralité de dents 22 dans sa partie terminale, destinées à coopérer avec l'autre berceau secondaire 17.

Le second berceau secondaire 17, articulé par la charnière 18b, présente une première extrémité 23, reliée à la même zone d'appui 20 centrale, et une seconde extrémité 24 libre, munie d'un crochet de blocage 25 dans sa partie terminale. Le crochet de blocage 25 fait saillie de la partie terminale de manière à coopérer avec les dents 22 du premier berceau secondaire 16 (figure 2). Les dents 22 définissent différents crans de réception pour le crochet de blocage 25.

Le second berceau secondaire 17 définit un diamètre supérieur par rapport au diamètre défini par le premier berceau secondaire 16, de sorte que l'extrémité libre 24 du second berceau secondaire 17 recouvre l'extrémité libre 21 du premier berceau secondaire 16, en position fermée (figure 2).

Les dents 22 du premier berceau secondaire 16 et le crochet de blocage 25 du second berceau secondaire 17 constituent des moyens de verrouillage de la pince 11, leurs orientations respectives empêchant tout retour des berceaux secondaires 16, 17 dans leur position de repos (figure 1).

La fermeture des berceaux secondaires 16 et 17, autour de l'élément 12, est automatique. Elle est actionnée par l'élément 12, qui vient en contact avec la zone d'appui centrale 20. L'élément 12 effectue une pression verticale, selon la flèche F, qui provoque l'abaissement de la zone d'appui centrale 20, en direction de l'intérieur du berceau principal 15. Il en résulte le basculement des berceaux secondaires 16 et 17, autour de leurs charnières 18a, 18b respectives, et la superposition de l'extrémité libre 24 du berceau secondaire 17 sur l'extrémité libre 21 du berceau secondaire 16.

La fermeture automatique de la pince 11, à savoir la superposition des berceaux secondaires 16, 17, dépend de la taille l'élément 12. Le crochet de blocage 25 se positionne dans un des crans délimités par les dents 22, également selon la taille de l'élément 12.

Le second berceau secondaire 17 peut comporter un second crochet de blocage 26, sollicité uniquement pour serrer un élément 12 de faible diamètre. Dans ce cas, les extrémités libres 21, 24 des berceaux secondaires 16, 17 se superposent, afin que le second crochet de blocage 26 coopère avec la première dent 22, disposée la plus en amont sur l'extrémité libre 21.

Les berceaux secondaires 16 et 17 comportent également et avantageusement des pattes flexibles 27a, 27b, 27c, dirigées vers l'intérieur des berceaux 16 et 17 et venant en contact avec l'élément cylindrique 12, une fois la pince 11 verrouillée (figures 2 et 4). Les pattes 27a, 27b, 27c sont flexibles, afin de pouvoir maintenir l'élément 12 à fixer, quel que soit son diamètre.

Dans le mode particulier de réalisation de la pince 11, représentée sur les figures 2 et 4, l'élément 12 est maintenu par les pattes flexibles 27a, 27b, 27c et ne repose pas sur la zone d'appui 20 centrale, quand les mâchoires de la pince 11 sont dans leur position de verrouillage.

À titre d'exemple (figures 1 et 2), la patte flexible 27a fait saillie de l'extrémité libre 21 du premier berceau secondaire 16 et est recourbée à 180°, pour former deux branches susceptibles de s'écarter et se rapprocher l'une de l'autre. La patte flexible 27b fait saillie de l'extrémité 19 du berceau 16, solidaire de la zone d'appui 20, en direction de l'intérieur du berceau 16. La patte flexible 27c fait saillie de l'extrémité 23 du berceau 17 et est recourbée à 180°, pour former deux branches susceptibles de s'écarter et se rapprocher l'une de l'autre.

Sur les figures 1 et 2, la pince 11 comporte une cheville 28 de fixation, réalisée dans le prolongement d'une surface de base 29 du berceau principal 15 et jouant le rôle de moyens de fixation de la pince 11 dans le logement 14 du support fixe 13 (figures 3 et 4). La forme de la cheville 28 de fixation est complémentaire de la forme du logement 14, lequel est, de préférence, circulaire.

La cheville 28 comporte un embout 30 libre non déformable, doté d'un chanfrein de forme tronconique, facilitant l'insertion de la cheville 28 dans le logement 14. La cheville 28 comporte une pluralité d'ailettes d'ancrage 31 identiques, disposées, de préférence régulièrement, sur toute la longueur de son fût. Les ailettes 31 ont pour rôle d'optimiser l'ancrage et la solidarisation de la pince 11 dans le support fixe 13 et sont suffisamment rigides, afin d'éviter une extraction intempestive de la cheville 28, après installation dans le logement 14 (figure 3).

Par ailleurs, les ailettes 31 de la cheville 28 sont dimensionnées en fonction des tolérances du logement 14, afin d'obtenir un faible effort de montage. À titre d'exemple, le logement 14 est un trou de section circulaire.

La partie supérieure du fût de la cheville 28 est formée par deux montants 32a, 32b parallèles déformables, faisant saillie de la surface de base 29 du berceau principal 15. La partie inférieure du fût de la cheville 28 est formée par l'embout 30, constituant l'âme des deux montants 32a, 32b, reliés par une ailette 31.

Les montants 32a, 32b délimitent une fente 33 d'insertion, coopérant avec une goupille d'actionnement 34, pendant sous la zone d'appui centrale 20 de la pince 11, sensiblement en regard de la fente 33.

La goupille d'actionnement 34 fait saillie de la zone d'appui 20 centrale, selon la flèche F, et comporte, de préférence, une charnière d'articulation 35, autorisant un léger pivotement de la goupille 34 par rapport à la zone d'appui 20. La goupille d'actionnement 34 présente une extrémité libre 36, de préférence, biseautée.

La cheville de fixation 28 et la goupille d'actionnement 34 coopèrent pour effectuer le verrouillage de la pince 11 à l'intérieur du logement 14 du support fixe 13, comme cela va être décrit ci-dessous au regard des figures 2 à 4.

Le serrage et le verrouillage de l'élément 12 dans les mâchoires de la pince 11 entraînent l'abaissement de la zone d'appui 20, selon la flèche F, et l'insertion de la goupille 34 dans la fente 33.

Chaque montant 32a, 32b comporte un bossage 37a, 37b, délimitant avec l'autre bossage 37a, 37b disposé en regard, un intervalle de passage pour la goupille 34, inférieur à la largeur de la fente 33. La goupille d'actionnement 34 est insérée dans la fente 33, passe entre les bossages 37a, 37b et entraîne l'écartement des bossages 37a, 37b. Il en résulte l'expansion radiale des montants 32a, 32b de la cheville 28 et l'ancrage de la cheville 28 dans le logement 14 du support fixe 13, par l'intermédiaire des ailettes 31.

La taille des bossages 37a, 37b est déterminée en fonction de la taille de la goupille 34, de la taille de la fente 33 et de l'expansion radiale souhaitée des montants 32a, 32b. La longueur d'insertion de la goupille 34 à l'intérieur de la fente 33 dépend de la taille de l'élément 12 enfermé entre les mâchoires de la pince 11. Plus le diamètre de l'élément 12 est grand, plus l'amplitude de basculement des berceaux secondaires 16 et 17 est faible et plus l'abaissement de la goupille 34 dans la fente 33 est faible.

Par ailleurs, l'extrémité libre 36 biseautée de la goupille 34 assure une expansion progressive des montants 32a, 32b dans le logement 14.

Sur la figure 3, la pince 11 est en attente de l'élément 12 à fixer et la cheville 28 est montée glissante dans le logement 14 du support fixe 13. Les ailettes 31 de la cheville 28 autorisent une légère rotation de la cheville 28 dans le logement 14, mais sont suffisamment rigides pour empêcher une extraction involontaire.

Sur la figure 4, l'élément 12 a actionné à la fois le verrouillage et la fermeture automatique de la pince 11 et la fixation de la pince 11 dans le support fixe 13.

La goupille 34 est insérée complètement dans la fente 33 et la pince 11 maintient l'élément 12. Les montants 32a, 32b sont déformés par l'insertion de la goupille 34 entre les bossages 37a, 37b et sont ancrés dans les parois du logement 14. Il en résulte une fixation optimale de la pince 11, ce qui empêche toute rotation relative de la pince 11 à l'intérieur du logement 14.

La fermeture automatique des berceaux secondaires 16, 17, par pression rapide de l'élément 12 sur la zone d'appui centrale 20, provoque ainsi simultanément la fixation rapide et sans effort de la cheville 28 dans le support fixe 13, par insertion de la goupille 34 dans la fente 33 et expansion radiale des montants 32a, 32b dans le logement 14. Un tel dispositif de fixation 10 selon l'invention présente donc l'avantage de combiner simultanément le serrage de l'élément 12 entre les mâchoires de la pince 11 et le verrouillage de la pince 11 dans le logement 14 du support fixe 13, sans l'utilisation d'un outil spécifique.

Par ailleurs, l'intervalle de passage délimité par les deux bossages 37a, 37b, internes à la fente 33, est choisi en fonction de la valeur prédéterminée de l'épaisseur de la goupille d'actionnement 34. L'effort de tenue mécanique de la cheville 28 dans le logement 14 du support fixe 13 peut ainsi être optimisé.

L'invention n'est pas limitée au mode de réalisation décrit ci-dessus. Quelle que soit la taille de l'élément 12, celui-ci peut prendre une tout autre forme, les dents 22, les crochets de blocage 25, 26 et les pattes flexibles 27a, 27b, 27c devant être conformés pour maintenir l'élément 12 solidement entre les mâchoires de la pince 11.

Le logement 14 peut prendre une tout autre forme intérieure, sans contre dépouille, la forme de la cheville 28 de la pince 11 devant être complémentaire.

La taille de la goupille 34 et de l'intervalle entre les bossages 37a, 37b peut être modifiée, pour faire évoluer la résistance à la fixation de la cheville 28.

Le bord supérieur de la fente 33 peut comporter un chanfrein au niveau de la surface de base 29 du berceau principal 15, facilitant l'introduction de la goupille d'actionnement 34.

## Revendications

1. Dispositif de fixation (10), d'un élément (12) sur un support fixe (13), comprenant une pince de serrage (11) à fermeture automatique, destinée à maintenir l'élément (12), après fixation sur le support (13), et comportant :
- un berceau principal (15), muni à ses extrémités de berceaux secondaires (16, 17), constituant les mâchoires de la pince (11),
- une zone d'appui (20) centrale, formée par une partie des berceaux secondaires (16, 17) et coopérant avec l'élément (12) à fixer, pour actionner la fermeture automatique des berceaux secondaires (16, 17) autour de l'élément (12),
- des moyens de fixation (28) de la pince (11), dans un logement (14) du support fixe (13),
dispositif de fixation **caractérisé en ce que** la zone d'appui (20) de la pince (11) comporte des moyens d'actionnement (34) coopérant avec lesdits moyens de fixation (28), pour verrouiller la pince (11) dans le logement (14) lors de la fermeture automatique des berceaux secondaires (16, 17).

2. Dispositif de fixation selon la revendication 1, **caractérisé en ce que** lesdits moyens d'actionnement comportent une goupille (34), faisant saillie de la zone d'appui (20), à l'intérieur du berceau principal (15).

3. Dispositif de fixation selon la revendication 2, **caractérisé en ce que** la goupille (34) comporte une extrémité libre (36) biseautée.

4. Dispositif de fixation selon l'une des revendications 2 et 3, **caractérisé en ce que** la goupille (34) est reliée à la zone d'appui (20) par une charnière d'articulation (35).

5. Dispositif de fixation selon l'une quelconque des revendications 2 à 4,
**caractérisé en ce que** lesdits moyens de fixation comportent une cheville (28) comprenant :
- deux montants parallèles (32a, 32b) déformables, solidaires du berceau principal (15) de la pince (11) et délimitant une fente d'insertion (33), la goupille d'actionnement (34) s'insérant dans la fente (33) pendant la fermeture automatique des berceaux secondaires (16, 17), provoquant l'expansion radiale des montants (32a, 32b), dans le logement (14) du support fixe (13),
- et un embout libre (30) non déformable, constituant l'âme des deux montants (32a, 32b).

6. Dispositif de fixation selon la revendication 5, **caractérisé en ce que** chaque montant (32a, 32b) est doté d'au moins un bossage interne (37a, 37b), lesdits bossages (37a, 37b) étant disposés en regard à l'intérieur de la fente (33) et délimitant un intervalle de passage pour la goupille d'actionnement (34).

7. Dispositif de fixation selon l'une quelconque des revendications 5 et 6, **caractérisé en ce que** la cheville (28) comporte des ailettes d'ancrage (31), réparties sur toute la longueur de son fût.

8. Dispositif de fixation selon la revendication 7, **caractérisé en ce que** le diamètre des ailettes (31) est déterminé en fonction du diamètre du logement (14), dans lequel est positionnée la cheville (28).

9. Dispositif de fixation selon l'une quelconque des revendications 5 à 8, **caractérisé en ce que** l'embout (30) de la cheville (28) comporte un chanfrein de forme tronconique.

## Claims

1. Device (10) for fixing an element (12) to a fixed support (13), comprising an automatically-closing holding collet (11) adapted to hold the element (12) after fixing to the support (13), and including:
- a main cradle (15) provided at its ends with secondary cradles (16, 17) forming the jaws of the collet (11),
- a central support zone (20) formed by a portion of the secondary cradles (16, 17) and cooperating with the element (12) to be fixed to actuate the automatic closure of the secondary cradles (16, 17) around the element (12),
- means (28) for fixing the collet (11) in a housing (14) of the fixed support (13),
**characterised in that** the support zone (20) of the collet (11) includes actuation means (34) cooperating with said fixing means (28) to lock the collet (11) in the housing (14) during the automatic closure of the secondary cradles (16,17).

2. Fixing device according to claim 1, **characterised in that** said action means include a pin (34) projecting from the support zone (20) inside the main cradle (15).

3. Fixing device according to claim 2, **characterised in that** the pin (34) has a tapered free end (36).

4. Fixing device according to either of claims 2 and 3, **characterised in that** the pin (34) is connected to the support zone (20) by a hinge (35).

5. Fixing device according to any one of claims 2 to 4, **characterised in that** said fixing means include a dowel (28) comprising:
- two parallel deformable posts (32a, 32b) fastened to the main cradle (15) of the collet (11) and delimiting an insertion slot (33), the actuation pin (34) being inserted in the slot (33) during the automatic closure of the secondary cradles (16, 17), causing radial expansion of the posts (32a, 32b) in the housing (14) of the fixed support (13), and
- a non-deformable free tip (30) constituting the core of the two posts (32a, 32b).

6. Fixing device according to claim 5, **characterised in that** each post (32a, 32b) has at least one internal boss (37a, 37b), said bosses (37a, 37b) being disposed facing the interior of the slot (33) and delimiting a gap for the actuation pin (34) to pass through.

7. Fixing device according to either of claims 5 and 6, **characterised in that** the dowel (28) includes anchor ribs (31) distributed over the entire length of its shank.

8. Fixing device according to claim 7, **characterised in that** the diameter of the ribs (31) is determined as a function of the diameter of the housing (14) in which the dowel (28) is positioned.

9. Fixing device according to any one of claims 5 to 8, **characterised in that** the tip (30) of the dowel (28) has a frustoconical taper.

## Patentansprüche

1. Befestigungsvorrichtung (10) für ein Element (12) an einem festgelegten Trägerteil (13) mit einer sich automatisch schließenden Klemmschließe (11), die das Element (12) nach dem Befestigen an dem Trägerteil (13) hält und die
- über eine Haupthaltevorrichtung (15), die an ihren Enden mit Nebenhaltevorrichtungen (16, 17) ausgestattet ist, die die Arme der Schließe (11) bilden,
- über einen mittigen Abstützbereich (20), der durch einen Teil der Nebenhaltevorrichtungen (16, 17) gebildet ist und mit dem zu befestigenden Element (12) zusammenwirkt, um das automatische Schließen der Nebenhaltevorrichtungen (16, 17) um das Element (12) herum zu betätigen, und
- über Befestigungsmittel (28) der Schließe (11) in einem Aufnahmebereich (14) des festen Trägerteils (13) verfügt,
wobei die Befestigungsvorrichtung **dadurch gekennzeichnet ist, dass** der Abstützbereich (20) der Schließe (11) über Betätigungsmittel (34) verfügt, die mit den Befestigungsmitteln (28) zusammenwirken, um die Schließe (11) in dem Aufnahmebereich (14) während des automatischen Schließens der Nebenhaltevorrichtungen (16, 17) zu verriegeln.

2. Befestigungsvorrichtung nach Anspruch 1, **dadurch gekennzeichnet, dass** die Betätigungsmittel über einen Stift (34) verfügen, der aus dem Abstützbereich (20) innerhalb der Haupthaltevorrichtung (15) vorsteht.

3. Befestigungsvorrichtung nach Anspruch 2, **dadurch gekennzeichnet, dass** der Stift (34) über ein abgeschrägtes freies Ende (36) verfügt.

4. Befestigungsvorrichtung nach Anspruch 2 oder 3, **dadurch gekennzeichnet, dass** der Stift (34) durch ein Drehgelenk (35) mit dem Abstützbereich (20) verbunden ist.

5. Befestigungsvorrichtung nach einem der Ansprüche 2 bis 4, **dadurch gekennzeichnet, dass** die Befestigungsmittel einen Dübel (28) aufweisen, der
- mit zwei flexiblen parallelen Schenkeln (32a, 32b), die einstückig mit der Haupthaltevorrichtung (15) der Schließe (11) ausgebildet sind und einen Einführspalt (33) umgrenzen, wobei sich der Betätigungsstift (34) während des automatischen Schließens der Nebenhaltevorrichtungen (16, 17) in den Spalt (33) einfügt, wodurch eine radiale Aufweitung der Schenkel (32a, 32b) in dem Aufnahmebereich (14) des festgelegten Trägerteils (13) hervorgerufen ist,
- und mit einem freien, nicht flexiblen Endstück (30) ausgebildet ist, das den Sockel der beiden Schenkel (32a, 32b) bildet.

6. Befestigungsvorrichtung nach Anspruch 5, **dadurch gekennzeichnet, dass** jeder Schenkel (32a, 32b) mit wenigstens einer innenseitigen Erhebung (37a, 37b) versehen ist, wobei die Erhebungen (37a, 37b) in Richtung auf das Innere des Spalts (33) ausgerichtet sind und einen Durchgangsraum für den Betätigungsstift (34) begrenzen.

7. Befestigungsvorrichtung nach Anspruch 5 oder Anspruch 6, **dadurch gekennzeichnet, dass** der Dübel (28) über Verankerungsrippen (31) verfügt, die über die gesamte Länge des Schafts verteilt sind.

8. Befestigungsvorrichtung nach Anspruch 7, **dadurch gekennzeichnet, dass** der Durchmesser der Rippen (31) entsprechend dem Durchmesser des Aufnahmebereichs (14) festgelegt wird, in dem der Dübel (28) angeordnet ist.

9. Befestigungsvorrichtung nach einem der Ansprüche 5 bis 8, **dadurch gekennzeichnet, dass** das Endstück (30) des Dübels (28) eine kegelstumpfartige Abschrägung aufweist.
